# EUROPÄISCHE PATENTSCHRIFT

(11) **EP 2 923 104 B1**
(45) Veröffentlichungstag und Bekanntmachung des Hinweises auf die Patenterteilung: **30.05.2018**
(21) Anmeldenummer: 13792924.6
(22) Anmeldetag: 20.11.2013
(51) Int. Cl.: F16D 55/225, F16D 65/097

(54) **BREMSBELAGHALTERUNG FÜR EINE SCHEIBENBREMSE EINES KRAFTFAHRZEUGS**
BRAKE PAD RETAINER FOR A DISK BRAKE OF A MOTOR VEHICLE
SUPPORT DE GARNITURE DE FREIN POUR UN FREIN À DISQUE D'UN VÉHICULE À MOTEUR

(30) Priorität: 20.11.2012 DE 102012111175; 22.02.2013 DE 102013101779
(43) Veröffentlichungstag der Anmeldung: 30.09.2015
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE); SCHROPP, Joseph, 94428 Eichendorf (DE); GRAAF, Jutta, 82377 Penzberg (DE)
(86) Internationale Anmeldenummer: PCT/EP2013/074265
(87) Internationale Veröffentlichungsnummer: WO 2014/079869

(56) Entgegenhaltungen:
- US-A- 3 677 373
- US-A- 3 841 445
- US-A- 4 074 795
- US-A- 4 335 806
- US-A- 4 618 034

## Beschreibung

Die vorliegende Erfindung betrifft eine Scheibenbremse eines Kraftfahrzeugs gemäß dem Oberbegriff des Anspruchs 1.

Aus dem Stand der Technik bekannte konventionelle Bremsbelagsysteme weisen üblicherweise beidseitig einer Bremsscheibe zugeordnete Bremsbeläge mit einem Reibbelag und einer den Reibbelag tragenden Belagträgerplatte auf, welche radial federbelastet durch eine Belaghaltefeder gesichert in einem Belagschacht eines ortsfesten Bremsträgers mit die Bremsbeläge seitlich einfassenden einlaufseitigen und auslaufseitigen Bremsträgerhörner gehalten sind. Die Innenseiten dieser den Belagschacht seitlich begrenzenden Bremsträgerhörner sind dabei üblicherweise parallel zueinander ausgebildet, so dass ein üblicherweise mit zwei parallel zueinander ausgerichteten Seitenrändern ausgebildeter Bremsbelag radial von oben in den Belagschacht einführbar ist und mit Hilfe einer Belaghaltefeder, die von einem Belaghaltebügel überspannt wird und so zur Stabilisierung des Bremsbelags Beschleunigungen oder Rüttelbelastungen entgegenwirkt, die auf den Bremsbelags in dem Belagschacht durch von außen quer zur Zuspannrichtung wirkenden äußeren Kräften hervorgerufen werden.

Problematisch ist, dass die Kraft der Belaghaltefedern nicht so groß bemessen sein darf, dass ein radiales Herausheben des Bremsbelags bei Beschleunigungen jeglicher Größe verhindert wird, da sonst die für den Zuspannvorgang zu beaufschlagende Verschiebekraft zu hoch wäre und sich zudem nach einem erfolgten Bremsvorgang kein Lüftspiel zwischen den Bremsbelägen und der Bremsscheibe einstellen würde, was zu einer schleifenden Bremse führen würde.

Hebt allerdings ein Bremsbelag infolge äußerer Kräfte von seiner Aufstandsfläche am Boden des Belagsschachtes radial nach oben ab, so verkantet er in der Führung im Bremsträger, d.h. im Belagschacht, wodurch die Bewegung des Bremsbelages gebremst bzw. abgestoppt wird.

Um eine sichere Funktion der Scheibenbremse zu gewährleisten, ist es erforderlich, die Bremsbeläge im Bremsträger zuverlässig zu führen und zu fixieren. Bei neueren Bremsbelagkonzepten oder beispielsweise der in der US 4,335,806 A beschriebenen Scheibenbremse mit asymmetrisch ausgebildeten Bremsbelägen ist der Bremsbelag an einer Seitenstirnfläche über einen Formschluss an der Innenseite eines Trägerhorns des Bremsträgers geführt. Der Bremsbelag wird bei der Montage durch eine Schwenkbewegung in den Belagschacht eingesetzt, so dass die andere Stirnseitenfläche des Bremsbelags nach dem Einschwenken in die Arbeitsposition radial frei beweglich vor der Innenseite des gegenüberliegenden Trägerhorns des Bremsträgers liegt. Hebt dieser Bremsbelag nun auf Grund von außen quer zur Zuspannrichtung wirkenden äußeren Kräften auf dieser "freien" Seiten radial nach oben ab, so vergrößert sich der Abstand des Bremsbelages zu diesem Trägerhorn, wobei der Bremsbelag in seiner Bewegung radial weg von der Bremsscheibe weder gebremst noch auf sonstige Weise aufgehalten wird. Auch die Vorspannkraft der Belaghaltefeder kann diese von außen einwirkenden Kräfte nicht abfangen. Der Bremsbelag hat somit einen großen Bewegungsspielraum, so dass nach einer solchen Schwenkbewegung des Bremsbelags radial nach außen bei einem anschließenden Zurückfallen auf die Aufstandsfläche am Boden des Belagschachtes aufschlägt. Dadurch wird ein großer Impuls erzeugt, der zum Bruch oder zum Reißen des Reibbelags des Bremsbelags führen kann.

Aufgabe der vorliegenden Erfindung ist es, eine Bremsbelaghalterung für eine Scheibenbremse eines Kraftfahrzeugs bereit zu stellen, die eine Fixierung der Bremsbeläge im Bremsträger derart gewährleistet, dass die Bremsbeläge in einer Zuspannrichtung leicht verschiebbar, aber radiale Verschwenkbewegungen des Bremsbelags aus dem Belagschacht heraus weitgehend verhinderbar sind. Diese Aufgabe wird durch eine Bremsbelaghalterung einer Scheibenbremse für ein Kraftfahrzeug mit den Merkmalen des Anspruchs 1 gelöst.

Bei der erfindungsgemäßen Scheibenbremse ist an dem in Drehrichtung der Bremsscheibe von dem ersten Bremsträgerhorn beabstandeten zweiten Bremsträgerhorn ein ein an dem auslaufseitigen Bremsträgerhorn drehbar oder verschiebbar befestigter Anschlag vorgesehen, mit dem eine radiale Bewegung des jeweiligen Bremsbelags nach erfolgter Montage in den Belagschacht auf ein vorgegebenes Spiel beschränkbar ist, wobei der Anschlag in seiner Sperrstellung derart positioniert ist, dass eine radiale Bewegung des jeweiligen Bremsbelages auf ein vorgegebenes Spiel beschränkt ist. Dadurch ist ein Herausdrehen des Bremsbelags aus dem Belagschacht des Bremsträgers auf ein vorbestimmtes Maß beschränkt, welches dabei so bemessen ist, dass eine Beschädigung der Belagmasse infolge beispielsweise einer Rüttelbelastung durch die bei einem Wiederaufprall des Bremsbelags auf der Auflagefläche des Belagschachts hervorgerufene begrenzte maximal erreichbare Impulsenergie wirksam verhindert ist.

Die drehbare oder verschiebbare Befestigbarkeit des Anschlags an dem zweiten Bremsträgerhorn hat den Vorteil, dass in einfacher Weise über eine Montage des Bremsbelags im Bremsträger der Anschlag in eine Position verschoben oder gedreht werden kann, die ein Einschwenken des Bremsbelags in den Belagschacht des Bremsträgers ermöglicht und nach erfolgtem Einschwenken des Bremsbelags der Anschlag in einfacher Weise in seine Sperrstellung geschoben oder gedreht werden kann, so dass bei nachfolgenden äußeren Krafteinwirkungen eine Radialbewegung des Bremsbelags auf ein vorgegebenes Spiel beschränkt ist.

Vorteilhafte Ausführungsvarianten der Erfindung sind Gegenstand der Unteransprüche.

Gemäß einer vorteilhaften Ausführungsvariante weist die dem zweiten Bremsträgerhorn nahe Seitenkante der Belagträgerplatte eine parallel zur Anschlagsfläche des Anschlags ausgerichtete Anschlagsfläche auf. Besonders bevorzugt weist dabei die dem zweiten Bremsträgerhorn nahe Seitenkante der Belagträgerplatte einen Vorsprung auf, dessen Oberkante die Anschlagfläche für den Anschlag bildet. Dadurch ist eine einfache Ausführung des Anschlags, beispielsweise als Sperrriegel, ermöglicht, welcher beispielsweise auf der der Bremsscheibe abgewandten Oberseite des zweiten Bremsträgerhorns verschiebbar oder drehbar montiert ist.

Gemäß einer weiteren bevorzugten Ausführungsvariante der Erfindung ist der Anschlag als elastisches Federelement ausgebildet. Durch die Elastizität des Anschlags ist neben der Wegbegrenzung auf einfache Weise eine Abbremsung bzw. Dämpfung einer Radialbewegung des Bremsbelags erreichbar, mit der den Bremsbelag beschädigende Stoßimpulse zusätzlich vermeidbar sind. Besonders bevorzugt ist die Radialbewegung des jeweiligen Bremsbelages nach erfolgter Montage in dem Belagschacht auf ein Spiel von 2 mm, besonders bevorzugt auf ein Spiel von maximal 0,5 mm begrenzt. Durch die Begrenzung der Radialbewegung des Bremsbelags auf ein derart kleines Spiel ist es ermöglicht, durch radiale Auslenkungen verursachte Beschädigungen des Bremsbelags, insbesondere des Reibbelags, erfolgreich zu verhindern.

Nachfolgend werden Ausführungsbeispiele der Erfindung anhand der beiliegenden Zeichnungen näher beschrieben. Es zeigen:
- Figur 1: eine schematische Ansicht von vorne auf einen Ausschnitt auf eine Bremsbelaghalterung mit an einem Bremsträger befestigten Anschlag;
- Figur 2: eine Ansicht von oben auf die Bremsbelaghalterung aus Figur 1 und
- Figur 3: eine schematische Ansicht eines Ausschnitts der in Figur 1 gezeigten Bremsbelaghalterung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsbelaghalterung, des Bremsträgers, des Bremsbelags, des Anschlags, der Belaghaltefeder und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

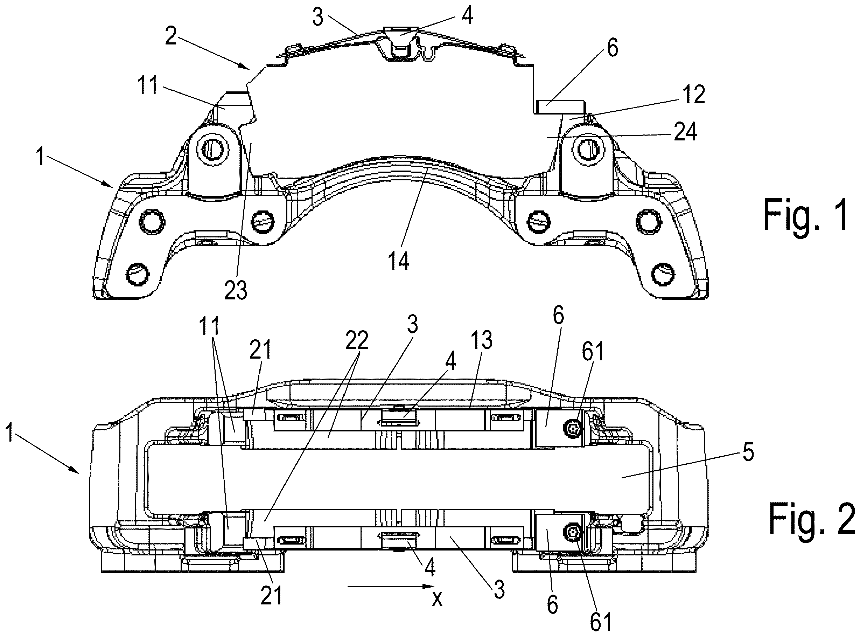

In Figur 1 ist die prinzipielle Anordnung einer Ausführungsvariante einer erfindungsgemäßen Bremsbelaghalterung für eine Scheibenbremse, insbesondere für ein Nutzfahrzeug, gezeigt.

Dabei ist ein Bremsbelag 2 mit einer Belagträgerplatte 21 und einem Reibbelag 22 in einem Belagschacht 13 eines Bremsträgers 1 eingesetzt. Der Bremsträger 1 überspannt dabei eine Bremsscheibe 5, die während der Fahrt des Kraftfahrzeugs in eine Hauptdrehrichtung X bei Vorwärtsfahrt mit einer Radachse des Kraftfahrzeugs dreht und die vorzugsweise beidseitig der Bremsscheibe 5 angeordneten Bremsbeläge 2 bei einem Bremsvorgang an die Bremsscheibe 5 anpressbar sind.

Der Belagschacht 13 wird dabei im Wesentlichen durch die Bremsbeläge 2 seitlich einfassende einlaufseitige und auslaufseitige Bremsträgerhörner 11, 12 und eine die Bremsträgerhörner 11, 12 miteinander verbindende Brücke gebildet, wobei der Abstand zwischen den beiden Bremsträgerhörnern 11, 12, betrachtet in der Hauptdrehrichtung X der Bremsscheibe, so bemessen ist, dass ein jeweiliger Bremsbelag 2, insbesondere die Belagträgerplatte 21 des Bremsbelags 2, bei der Montage zunächst mit einer ersten Seitenstirnfläche unter Ausbildung eines Formschlusses beispielsweise in eine Ausnehmung auf der dem Belagschacht 13 zugewandten Innenseite des in Drehrichtung X der Bremsscheibe 5 betrachtet vorderen ersten Bremsträgerhorn 11 eingesetzt wird und anschließend durch eine Schwenkbewegung vollständig in den Belagschacht 13 eingesetzt wird, so dass auch die gegenüberliegende Seitenstirnfläche der Belagträgerplatte 21 des Bremsbelags 2 dem zweiten Bremsträgerhorn 12 gegenüberliegt bzw. an diesem anliegt.

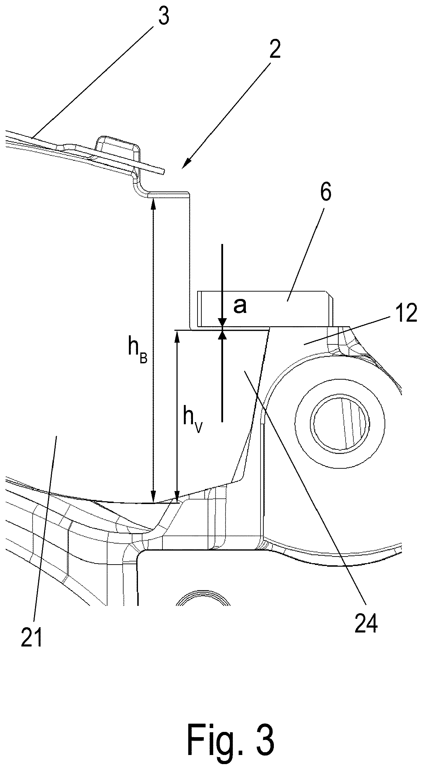

An dem in Drehrichtung X der Bremsscheibe 5 hinteren Bremsträgerhorn 12 ist ein Anschlag 6 vorgesehen, mit dem eine Radialbewegung des jeweiligen Bremsbelags 2 nach erfolgter Montage in dem Belagschacht 13 auf ein vorgegebenes Spiel a beschränkbar ist. Der Anschlag 6 ist dabei in dem in Figur 1 gezeigten Ausführungsbeispiel als bewegbarer Sperrriegel ausgebildet, der, wie in der Draufsicht in Figur 2 dargestellt, beispielsweise über eine Schraube 61 auf der der Drehachse der Bremsscheibe 5 abgewandten Oberseite des zweiten Bremsträgerhorns 12 festgelegt ist und so in einfacher Weise vor dem Einsetzen des Bremsbelags 2 in eine Position gedreht werden kann, in der ein Einschwenken des Bremsbelags 2 in den Belagschacht 13 möglich ist und nach dem Einschwenken des Bremsbelags 2 in seine Arbeitsstellung in den Schwenkbereich oberhalb des Belagschachts 13 eindrehbar ist und damit eine Radialbewegung des Bremsbelags 2 im Bereich des zweiten Bremsträgerhorns 12 von der Drehachse der Bremsscheibe 5 radial nach außen auf ein vorbestimmtes Spiel a reduziert. Das radiale Spiel a ist nochmals in der Detailansicht in Figur 3 dargestellt.

Alternativ zur Drehbewegbarkeit des Anschlags 6 ist auch eine Ausbildung des Anschlags 6 als parallel zur Drehrichtung X der Bremsscheibe 5 verschiebbarer Sperrriegel denkbar.

Zusätzlich zu dem Anschlag 6 ist der Bremsbelag 2 durch eine an sich bekannte Belaghaltefeder 3 in den Belagschacht 13 gehalten, wobei die Belaghaltefeder 3 auf einer der Drehachse der Bremsscheibe 5 abgewandten Oberseite des Belaghalteträgers 21 des Bremsbelags 2 fixiert ist und sich nach oben, d.h. von der Drehachse der Bremsscheibe 5 weg an eine den Bremsträger 1 in Richtung der Fahrzeugachse überspannenden Belaghaltebügel 4 abstützt.

Wie in den Figuren 1 und 3 gut zu erkennen ist, weist die dem zweiten Bremsträgerhorn 12 nahe Seitenstirnfläche der Belagträgerplatte 21 eine parallel zur Anschlagsfläche des Anschlags 6 ausgerichtete Anschlagfläche auf. In der hier gezeigten Ausführungsvariante weist dabei die dem auslaufseitigen Bremsträgerhorn 12 nahe Seitenkante der Belagträgerplatte 21 einen Vorsprung 24 mit einer bevorzugt trapezförmigen, insbesondere rechteckigen Außenkontur auf, dessen Oberkante, radial zur Drehachse der Bremsscheibe 5 betrachtet, die Anschlagsfläche zum Anschlag 6 bildet.

Die Oberkante des Vorsprungs 24 liegt dabei bevorzugt geringfügig, insbesondere um das vorgegebene Spiel a unterhalb der radial zur Drehachse der Bremsscheibe 5 außen liegenden oberen Stirnfläche des auslaufseitigen Bremsträgerhorn 12, auf der der Anschlag 6 festgelegt ist. Dabei liegt die Oberkante des Vorsprungs 24 und damit auch die obere Stirnfläche des auslaufseitigen Bremsträgerhorn 12 bevorzugt auf einer Höhe h_{V} von 40 % bis 70% der radialen Höhe h_{B} des Belagträgers 21 des Bremsbelags 2.

Das zwischen dem Anschlag 6 und der Anschlagfläche der Belagträgerplatte 21 des Bremsbelags 2 vorhandene Spiel a beträgt vorzugsweise maximal 2 mm, besonders bevorzugt maximal 0,5 mm, um die Auswirkungen eines Aufschlagens des Bremsbelags 2 auf den Boden des Belagschachtes 13 soweit einzuschränken, dass eine Beschädigung des Bremsbelags 2 verhindert wird. Um die radiale Auslenkung des Bremsbelags 2 infolge einer solchen Rüttelbelastung weiter abzudämpfen, ist der Anschlag 6 in einer nochmals bevorzugten Ausführungsvariante als elastisches Federelement ausgebildet. So kann der Anschlag 6 beispielsweise aus einem hitzebeständigen Hartgummi oder einer Blattfeder, beispielsweise aus Metall, bestehen.

Denkbar ist auch, den Anschlag am Bremsbelag 2, insbesondere an der Belagträgerplatte 21 des Bremsbelags 2 anzubringen, wobei der Anschlag 6 bei der Montage des Bremsbelags 2 mit dem zweiten Bremsträgerhorn 12 in Eingriff kommt und so eine radiale Auslenkung auf das oben genannte Spiel a begrenzt.

Durch die Anbringung des Anschlags 6 zwischen Bremsträger 1 und Bremsbelag 2 ist außerdem aufgrund der Fertigungstoleranzen dieser Bauteile gewährleistet, dass das Spiel a möglichst klein gehalten werden kann.

Zur Demontage der Bremsbeläge 2 wird der Anschlag je nach Befestigungsart und konstruktiver Ausgestaltung des Anschlags 6 von dem Bremsträgerhorn 12 oder der Belagträgerplatte 21 demontiert oder entriegelt. Denkbar ist auch eine Fixierung des Anschlags 6 in seiner Sperrposition derart, dass bei der Demontage des Bremsbelags 2 der Anschlag 6 zerstört werden muss.

### Bezugszeichenliste

- 1: Bremsträger
- 2: Bremsbelag
- 3: Belaghaltefeder
- 4: Belaghaltebügel
- 5: Bremsscheibe
- 6: Anschlag

- 11: einlaufseitiges Bremsträgerhorn
- 12: auslaufseitiges Bremsträgerhorn
- 13: Belagschacht
- 14: Brücke
- 21: Belagträgerplatte
- 22: Reibbelag
- 23: Vorsprung
- 24: Vorsprung

- X: Hauptdrehrichtung der Bremsscheibe
- a: Spiel
- h_{B}: Höhe der Belaghalteplatte
- h_{V}: Höhe des Anschlagfläche des Vorsprungs

## Patentansprüche

1. Scheibenbremse eines Kraftfahrzeugs, insbesondere eines Nutzfahrzeugs, wobei beidseitig einer Bremsscheibe (5) zugeordnete Bremsbeläge (2) mit einem Reibbelag (22) und einer den Reibbelag (22) tragenden Belagträgerplatte (21) federbelastet durch wenigstens eine Belaghaltefeder (3) radial auslenkbar jeweils in einem Belagschacht (13) eines ortsfesten Bremsträgers (1) mit die Bremsbeläge (2) seitlich einfassenden Bremsträgerhörnern (11, 12) gelagert sind, wobei die Belagträgerplatte (21) der Bremsbeläge (2) im eingebauten Zustand an einem einlaufseitigen Bremsträgerhorn (11) formschlüssig gehalten ist, **dadurch gekennzeichnet, dass** an einem in einer Hauptdrehrichtung (X) der Bremsscheibe (5) von dem einlaufseitigen Bremsträgerhorn (11) beabstandeten auslaufseitigen Bremsträgerhorn (12) ein an dem auslaufseitigen Bremsträgerhorn (12) drehbar oder verschiebbar befestigter Anschlag (6) vorgesehen ist, mit dem eine radiale Bewegung des jeweiligen Bremsbelages (2) nach erfolgter Montage in dem Belagschacht (13) auf ein vorgegebenes Spiel (a) beschränkbar ist, wobei der Anschlag (6) in seiner Sperrstellung derart positioniert ist, dass eine radiale Bewegung des jeweiligen Bremsbelages (2) auf ein vorgegebenes Spiel (a) beschränkt ist.

2. Scheibenbremse nach Anspruch 1, **dadurch gekennzeichnet, dass** der Anschlag (6) als bewegbarer Sperrriegel ausgebildet ist.

3. Scheibenbremse nach einem der vorhergehenden Ansprüche, **dadurch gekennzeichnet, dass** die dem auslaufseitigen Bremsträgerhorn (12) nahe Seitenkante der Belagträgerplatte (21) eine parallel zur Anschlagfläche des Anschlags (6) ausgerichtete Anschlagfläche aufweist.

4. Scheibenbremse nach einem der vorhergehenden Ansprüche, **dadurch gekennzeichnet, dass** die dem auslaufseitigen Bremsträgerhorn (12) nahe Seitenstirnfläche der Belagträgerplatte (21) einen Vorsprung (24) aufweist, dessen Oberkante die Anschlagfläche zum Anschlag (6) bildet.

5. Scheibenbremse nach Anspruch 4, **dadurch gekennzeichnet, dass** die Oberkante des Vorsprungs (24) auf einer Höhe (h_{V}) von 40 % bis 70% der radialen Höhe (h_{B}) des Belagträgers (21) liegt.

6. Scheibenbremse nach Anspruch 4 oder 5, **dadurch gekennzeichnet, dass** der Vorsprung (24) als trapezförmiger, insbesondere rechteckiger Ansatz ausgebildet ist.

7. Scheibenbremse nach einem der Ansprüche 4 bis 6, **dadurch gekennzeichnet, dass** der Vorsprung (24) einstückig mit der Belagträgerplatte (21) ausgebildet ist.

8. Scheibenbremse nach einem der vorhergehenden Ansprüche, **dadurch gekennzeichnet, dass** der Anschlag (6) als elastisches Federelement ausgebildet ist.

9. Scheibenbremse nach einem der vorhergehenden Ansprüche, **dadurch gekennzeichnet, dass** die radiale Bewegung des jeweiligen Bremsbelages (2) nach erfolgter Montage in dem Belagschacht (13) auf ein Spiel (a) von maximal 2 mm begrenzt ist.

10. Scheibenbremse nach Anspruch 9, **dadurch gekennzeichnet, dass** die radiale Bewegung des jeweiligen Bremsbelages (2) nach erfolgter Montage in dem Belagschacht (13) auf ein Spiel (a) von maximal 0,5 mm begrenzt ist.

## Claims

1. Disc brake of a motor vehicle, in particular a utility vehicle, wherein on both sides of a brake disc (5) associated brake linings (2) with a friction lining (22) and a lining carrier plate (21) that supports the friction lining (22) are mounted under spring loading by at least one lining retaining spring (3), in each case in a radially deflectable manner in a lining cavity (13) of a positionally fixed brake carrier (1) with brake carrier horns (11, 12) that enclose the brake linings (2) laterally, such that in the assembled condition the lining carrier plate (21) of the brake lining (2) is held with interlock on a brake carrier horn (11) on the run-in side, **characterised in that** on a brake carrier horn (12) on the run-out side a distance away in the main rotation direction (X) from the brake carrier horn (11) on the run-in side there is provided a rotatably or displaceably fixed abutment (6), by which, after completed assembly in the lining cavity (13), a radial movement of the brake lining (2) concerned can be restricted to a predetermined play (a), such that in its blocking position the abutment (6) is located in such manner that a radial movement of the brake lining (2) concerned is restricted to a predetermined play (a).

2. Disc brake according to Claim 1, **characterised in that** the abutment (6) is in the form of a movable locking bolt.

3. Disc brake according to either of the preceding Claims, **characterised in that** the side edge of the lining carrier plate (21) closer to the brake carrier horn (12) on the run-out side has a stop surface directed parallel to the abutment surface of the abutment (6).

4. Disc brake according to any of the preceding claims, **characterised in that** the lateral end face of the lining carrier plate (21) closer to the brake carrier horn (12) on the run-out side has a projection (24), whose upper edge forms the stop surface to the abutment (6).

5. Disc brake according to Claim 4, **characterised in that** the upper edge of the projection (24) is located at a height (hᵥ) of 40% to 70% of the radial height (h_{B}) of the lining carrier (21).

6. Disc brake according to Claims 4 or 5, **characterised in that** the projection (24) is in the form of a trapezoidal, in particular a rectangular attachment.

7. Disc brake according to any of Claims 4 to 6, **characterised in that** the projection (24) is formed integrally with the lining carrier plate (21).

8. Disc brake according to any of the preceding claims, **characterised in that** the abutment (6) is in the form of an elastic spring element.

9. Disc brake according to any of the preceding claims, **characterised in that** the radial movement of the brake lining (2) after completed assembly in the lining cavity (13) is restricted to a play (a) of at most 2 mm.

10. Disc brake according to Claim 9, **characterised in that** the radial movement of the brake lining (2) after completed assembly in the lining cavity (13) is restricted to a play (a) of at most 0.5 mm.

## Revendications

1. Frein à disque d'un véhicule automobile, notamment d'un véhicule utilitaire, dans lequel des garnitures (2) de frein, associées des deux côtés à un disque (5) de frein et ayant une garniture (22) de friction et une plaque (21) de porte-garniture portant la garniture (22) de friction, sont montées en étant soumises à l'action d'au moins un ressort (3) de maintien de garniture en pouvant être déviées radialement respectivement dans un puits (13) de garniture d'un support (1) de frein à poste fixe ayant des cornes (11, 12) de support de frein enchâssant latéralement les garnitures (2) de frein, la plaque (21) de porte garniture des garnitures (2) de frein étant, à l'état monté, maintenue à complémentarité de forme sur une corne (11) de support de frein du côté de l'entrée, **caractérisé en ce que**, sur une corne (12) du support de frein, du côté de la sortie, à distance, dans un sens (X) de rotation principal du disque (5) de frein, de la corne (11) du support de frein du côté de l'entrée, est prévue une butée (6) pouvant tourner ou fixée de manière coulissante sur la corne (12) du support de frein du côté de la sortie, butée par laquelle un déplacement radial de la garniture (2) de frein peut, après montage effectué dans le puits (13) de garniture, être limité à un jeu (a) donné à l'avance, la butée (6) étant positionnée dans sa position d'arrêt, de manière à limiter un déplacement radial de la garniture (2) de frein à un jeu (a) donné à l'avance.

2. Frein à disque suivant la revendication 1, **caractérisé en ce que** la butée (6) est constituée en verrou d'arrêt mobile.

3. Frein à disque suivant l'une des revendications précédentes, **caractérisé en ce que** la corne (12) du support de frein du côté de la sortie a, à proximité du bord latéral de la plaque (21) de support de garniture, une surface de butée dirigée parallèlement à la surface de butée de la butée (6).

4. Frein à disque suivant l'une des revendications précédentes, **caractérisé en ce que** la corne (12) de support de frein du côté de la sortie a, près de la surface frontale latérale de la plaque (21) de support de garniture, une saillie (24), dont le bord supérieur forme la surface de butée avec la butée (6).

5. Frein à disque suivant la revendication 4, **caractérisé en ce que** le bord supérieur de la saillie (24) se trouve à une hauteur (hᵥ) représentant de 40% à 70% de la hauteur (h_{B}) radiale du support (21) de garniture.

6. Frein à disque suivant la revendication 4 ou 5, **caractérisé en ce que** la saillie (24) est constituée sous la forme d'un épaulement trapézoïdal, notamment rectangulaire.

7. Frein à disque suivant l'une des revendications 4 à 6, **caractérisé en ce que** la saillie (24) est constituée d'une pièce avec la plaque (21) de support de garniture.

8. Frein à disque suivant l'une des revendications précédentes, **caractérisé en ce que** la butée (6) est constituée sous la forme d'un élément de ressort élastique.

9. Frein à disque suivant l'une des revendications précédentes, **caractérisé en ce que** le déplacement radial de la garniture (2) de frein, après montage effectué dans le puits (13) de garniture, est limité à un jeu (a) de 2 mm au maximum.

10. Frein à disque suivant la revendication 9, **caractérisé en ce que** le déplacement radial de la garniture (2) de frein, après montage effectué dans le puits (13) de garniture, est limité à un jeu (a) de 0,5 mm au maximum.
